# EUROPEAN PATENT SPECIFICATION

(11) **EP 0 945 068 B1**
(45) Date of publication and mention of the grant of the patent: **02.05.2003**
(21) Application number: 99200552.0
(22) Date of filing: 26.02.1999
(51) Int. Cl.: A21D 8/04, A21D 2/22

(54) **Fermentation tolerant predough**
Fermentation-toleranter Vorteig
Pâte à travail indirect tolérante à la fermentation

(30) Priority: 24.03.1998 EP 98200946
(43) Date of publication of application: 29.09.1999
(73) Proprietor: CSM Nederland B.V., 1112 XE Diemen (NL)
(72) Inventor: Runci, Stefano, c/o Unil-IT SpA, 20154 Milan (IT)
(74) Representative: van Westenbrugge, André

(56) References cited:
- EP-A- 0 338 452
- EP-A- 0 468 731
- EP-A- 0 504 970
- EP-A- 0 676 142
- FR-A- 2 054 712
- US-A- 4 642 237
- BRÜMMER J M ET AL: "Backtechnische Wirkung von Weizenvor- und Weizensauerteigen." GETREIDE, MEHL UND BROT, vol. 38, no. 7, 1984, pages 203-205, XP002083189 Bundesforschungsanstalt für Getreide- & Kartoffelverarbeitung, Postfach 23, D-4930 Detmold, Federal Republic of Germany

## Description

Fermented predoughs or sponge doughs are often used in preparing doughs for baking bread or other bakery products. Although these doughs could contain sour dough systems, so far all fermented predoughs suffered from the fact that the process tolerance of the sponge was unsatisfactory at least if the final dough properties, such as specific volume of the baked product, the shape thereof, its crust colour, its friability, taste and flavour and its fresh keeping ability should be maintained or even improved. With process tolerance is meant that the fermentation time required for obtaining a fermented predough that can be used to prepare a final product with the desired properties can vary within a broad range but includes short times. Further for the desired process tolerance it would be beneficial if any type of flour, having any protein content could be applied. The known fermented predough systems often require very long fermentation times from about 18 hours, in order to obtain satisfactory volume, shape, crust colour and friability, taste, flavour and fresh keepability, which is very long for a baker in his bakery practise.
We now developed a predough system that already gives very good results after fermentation times of about 8 hrs so that a reduction in fermentation time of more than 50% can be achieved compared with the known systems, while simultaneously benefits can be obtained in the baked products produced, compared with baked products using a previous predough.

Although EP 338452 discloses in general terms a dough system that can contain a sour dough wherein xylanase can be present, this document does not disclose a fermented predough wherein such a sour dough containing system is present. In example 3 of this document a bread improver is disclosed that contains amylase, xylanase and ascorbic acid, however this improver does not contain a sour dough. The use of a sour dough is only indicated in very generic terms on p.3, 1.49 of this document, but no actual composition is disclosed that simultaneously contains a sour dough and the components of example 3. Therefore the advantages of the use of a sour dough containing all these ingredients can not be derived from this document.

US 4,642,237 discloses highly concentrated additive composition for use in yeast leavened wheat flour bakery products, said additive composition consisting of ascorbic acid, fungal α-amylase, potassium bromate, calcium carbonate, tricalcium phosphate and corn starch.
Example 4 of the US patent describes a sponge formulation that contains flour, yeast and water. In the same example it is said that typically 2 to 5g/100 lbs. of flour of Additive Formulations No. 1 or 2. may be added to the flour initially, or to the sponge at the bakery. Additive formulation 1 contains 2-25 wt.% (preferred 19.84 wt.%) ascorbic acid and 0.1-30 wt.% (preferred 7.5 wt.%) fungal α-amylase concentrate. Thus it may be concluded that US 4,642,237 suggests to add ascorbic acid and α-amylase to a sponge dough. However, no suggestions is made in the US-patent as to the inclusion of a sour dough system within the additive formulations.

EP-A 676 142 describes a method of preparing a mother dough in solid form. Example 4 of the European application discloses the preparation of a fermented mother dough wherein rye flour is fermented with lactic acid bacteria, additional rye flour is added and the fermented mash/rye flour slurry is gelatinised by heating, followed by rapid cooling. The product so obtained is to be used directly in the preparation of a final dough. No suggestion can be found in EP-A 676 142 to incorporate wheat sour dough into a predough, by combining such a wheat sour dough with flour, yeast and water.

Therefore we studied whether we could find a predough and a dough system that do not have the disadvantages, of the prior art systems.
This study resulted in our invention. This invention in the first instance concerns a fermented predough, suitable as additive for the preparation of a fermentation tolerant, stable final dough with a dry stickiness, which predough comprises:
(i) a wheat flour having a protein content of. 8.5-15.5 wt% and on flour:
(ii) 30-65 wt% of water, preferably 40-60 wt%
(iii)0.1-5 wt% of yeast, preferably 0.3-2 wt%
(iv) 0.5-10 wt%, preferably 2-8 wt% of a bread improver mix as obtainable as a dry mixture after mixing of:
   (a) > 97.5 wt%, preferably >98.5 wt% of a wheat sour dough
   (b) 0.1-1 wt%, preferably 0.2-0.8 wt% of ascorbic acid and
   (c) 0.005-0.5 wt%, preferably 0.01-0.3 wt% of an enzyme composition with alpha amylase and/or xylanase activity.

These fermented predoughs can then be applied in fermentation tolerant, stable final dough systems for the preparation of bread. The composition of the dough so obtained can be defined as fermentation tolerant, stable dough with a dry stickiness comprising:
(i) a wheat flour with a protein content of 8.5-15.5 wt% and, on total dough wt :
(ii) 15-50 wt%, preferably 18-45 wt% of water
(iii)0.04-4 wt%, preferably 0.05-2 wt% of yeast
(iv) 0.01-0.4 wt%, preferably 0.02-0.3 wt% of cereal malted flour, or dough conditioner or generic bread improver
(v) 0.5-1.5 wt% , preferably 1-1.2 wt% of salt
(vi) 7-80 wt%, preferably 8-75 wt% of the fermented predough with the composition of claim 1.

The amylase applied in our compositions can have an activity as measured by the method disclosed in our examples of 5,000-75,000 ICC-U/g, preferably 10,000-50,000 ICC-U/g, most preferably 15,000-35,000 ICC-U/g. The xylanase applied can have an activity in the range of 0.5-200 U/mg, preferably 1-100 U/mg, most preferably 2-50 U/mg as measured by the method disclosed in our examples.

The fermented predoughs are prepared by the following processing: Process for the preparation of a fermented predough, suitable as additive for the preparation of fermentation tolerant, stable dough with a dry stickiness wherein:
(i) a wheat flour with a protein content of 8.5-15.5 wt% is mixed with:
(ii) 30-65 wt% on flour of water
(iii) 0.1 - 5 wt% on flour of yeast
(iv) 0.5-10 wt% on flour of a bread improver mix as obtainable as a dry mixture after mixing of:
   (a) > 97.5 wt% of a wheat sour dough
   (b) 0.1-1 wt% of ascorbic acid and
   (c) 0.005- 0.5 wt% of an enzyme composition with alpha amylase and/or xylanase activity,
wherein the above ingredients (i)-(iv) are mixed and kneaded at ambient temperature during at least 2 minutes, while the mixture so obtained is fermented at 5-30 oC for at least 1.5 hrs.

The bread doughs are made by the following process: Process for the preparation of a fermentation tolerant, stable dough with a dry stickiness by:
(i) mixing and kneading of a wheat flour with a protein content of 8.5-15.5 wt%
(ii) with 5-95 wt%, preferably 15-50 wt% on flour of water
(iii)with 0.03-8 wt%, preferably 0.045-2 wt% on flour of yeast
(iv) with 0-12 wt%, preferably, 0.01-.4 wt% of cereal malted flour
(v) with 0-2.5 wt%, preferably 0.5-1.5 wt% of salt
(vi)and with 3-98 wt%, preferably 7-80 wt% on flour of a fermented predough with the composition according to claim 1, wherein the ingredients (i)-(vi) are mixed and kneaded first during 3-20 minutes, preferably 4-18 minutes, whereafter the mixture so obtained is rested during at least 3 minutes, preferably at least 5 minutes and the mixture obtained after resting is fermented during at least 15 minutes.

### EXAMPLES

A predough was made from the components as mentioned in the table below using the conditions indicated. In the table predoughs according to the invention (containing sour dough 99.35 %; ascorbic acid 0.6 % and an enzyme composition of alpha-amylase and/or xylanase; 0.05% having an amylase activity of 22835 ICC-u/g and a xylanase activity of 31.8 u/mg) and predoughs not according to the invention (ie without the sour dough/ascorbic acid/enzyme system) were made.
The amylase activity is measured according to ICC standard No 108, ICC-standard Methods (1995). The xylanase activity is measured according to The xylazyme Method in Megazyme XYL 9/95: Assay of endo-1,4-beta-D-Xylanase in Microbial Preparations. Megazyme Int Ireland Ltd, Bray Business Park Bray, Co Wicklow, Ireland.

In the bread dough according to the invention the predough according to the invention was present, while in the comparative dough this component was absent.

**Table**

| PREDOUGH | | |
|---|---|---|
| INGREDIENTS | PRIOR ART | ACCORDING TO INVENTION |
| FLOUR WITH 15 % PROT | 10 kg | -- |
| FLOUR WITH 11 % PROTEIN | -- | 10 KG |
| WATER | 5 kg | 5 kg |
| YEAST | 0.1 kg | 0.1 kg |
| SOUR DOUGH SYSTEM | -- | 0.6 kg |
| | | |
| PROCESS CONDITIONS KNEADING TIME | 6 min | 6 min |
| FERMENTATION TIME | a) 5 hrs | d) 5 hrs |
| | b) 8 hrs | e) 8 hrs |
| | c) 18 hrs | f) 18 hrs |
| FERMENTATION T | 18 °C | 18 °C |
| FINAL DOUGH T | 18 °C | 18 °C |
| | | |
| FINAL BREAD DOUGH PREDOUGH | 15.1 kg of prior art | 15.7 kg of invention |
| FLOUR 15 % PROTEIN | 10 kg | -- |
| FLOUR 11 % PROTEIN | -- | 10 kg |
| WATER | 9 kg | 9.5 kg |
| YEAST | 0.2 kg | 0.2 kg |
| MALTED FLOUR | 0.7 kg | 0.6 kg |
| SALT | 0.4 kg | 0.4 kg |
| TOTAL DOUGH | 35.4 kg | 36.4 kg |
| PROCESS CONDITIONS KNEADING | 3 min slow | 3 min slow |
| | 7 min fast | 7 min fast |
| RESTING TIME | 50 min | 50 min |
| RESTING T | 20 °C | 20 °C |
| PORTION WEIGHT | 500 g/piece | 500 g/piece |
| FERMENTATION TIME | 50 min | 50 min |
| BAKING COND | 230 °C-40 min | 230 °C-40 min |

| | | | | | | |
|---|---|---|---|---|---|---|
| ASSESSMENT OF FINAL DOUGH | | | | | | |
| | COMPa | COMPb | COMPc | INVd | INVe | INVf |
| FIRMNESS AFTER KNEADING | normal | normal | soft | firm | firm | firm |
| STICKINESS | sticky | sticky | sticky | dry | dry | dry |
| HANDLING | stable | normal | unstab | stable | stable | stable |
| FERM TOLERANCE* | 4 | 3 | 2 | 5 | 5 | 5 |

| | | | | | | |
|---|---|---|---|---|---|---|
| * ON SCALE OF 1-5, 1= NOT TOLERANT 5= TOLERANT | | | | | | |

| ASSESSMENT OF FINAL BAKED BREAD | | | | | | |
|---|---|---|---|---|---|---|
| | COMPa | COMPb | COMPc | INVd | INVe | INVf |
| BAKED SPEC V | less | normal | less | bigger | bigger | bigger |
| BAKED SHAPE | round | normal | too round | normal | normal | normal |
| CRUST COLOUR | dark | normal | darkish | normal | normal | normal |
| CRUST FRIABILITY | poor | good | poor | very G | very G | very G |
| TASTE/FLAVOUR | poor | fair | acidic | tasty | tasty | tasty |
| FRESH KEEPING | poor | normal | poor | good | good | good |

So it can be concluded that the bread doughs d-f according to the invention based on the use of predough fermented for 5-18 hrs all gave at least the same, but in general better performance than the bread doughs a-c based on prior art predoughs. In particular the bread doughs a and b based on predoughs made with short fermentation times gave bad results.

## Claims

1. Fermented predough, suitable as additive for the preparation of a fermentation tolerant, stable final dough with a dry stickiness, which predough comprises:
(i) a wheat flour having a protein content of 8.5-15.5 wt% and on flour:
(ii) 30-65 wt% of water, preferably 40-60 wt%
(iii)0.1-5 wt% of yeast, preferably 0.3-2 wt%
(iv) 0.5-10 wt%, preferably 2-8 wt% of a bread improver mix as obtainable as a dry mixture after mixing of:
(a) > 97.5 wt%, preferably >98.5 wt% of a wheat sour dough
(b) 0.1-1 wt%, preferably 0.2-0.8 wt% of ascorbic acid and
(c) 0.005-0.5 wt%, preferably 0.01-0.3 wt% of an enzyme composition with alpha amylase and/or xylanase activity.

2. Fermentation tolerant, stable dough with a dry stickiness comprising:
(i) a wheat flour with a protein content of 8.5-15.5 wt% and, on total dough wt :
(ii) 15-50 wt%, preferably 18-45 wt% of water
(iii)0.04-4 wt%, preferably 0.05-2 wt% of yeast
(iv) 0.01-0.4 wt%, preferably 0.02-0.3 wt% of cereal malted flour, or dough conditioner or generic bread improver
(v) 0.5-1.5 wt%, preferably 1-1.2 wt% of salt
(vi) 7-80 wt%, preferably 8-75 wt% of the predough with the composition of claim 1.

3. Process for the preparation of a fermented predough, suitable as additive for the preparation of fermentation tolerant, stable dough with a dry stickiness wherein:
(i) a wheat flour with a protein content of 8.5-15.5 wt% is mixed with:
(ii) 30-65 wt% on flour of water
(iii)0.1 - 5 wt% on flour of yeast
(iv) 0.5-10 wt% on flour of a bread improver mix as obtainable as a dry mixture after mixing of:
(a) > 97.5 wt% of a wheat sour dough
(b) 0.1-1 wt% of ascorbic acid and
(c) 0.005- 0.5 wt% of an enzyme composition with alpha amylase and/or xylanase activity,
wherein the above ingredients (i)-(iv) are mixed and kneaded at ambient temperature during at least 2 minutes, while the mixture so obtained is fermented at 5-30 °C for at least 1.5 hrs.

4. Process for the preparation of a fermentation tolerant, stable dough with a dry stickiness by:
(i) mixing and kneading of a wheat flour with a protein content of 8.5-15.5 wt%
(ii) with 15-50 wt% on flour of water
(iii)with 0.045-2 wt% on flour of yeast
(iv) with 0.01-.4 wt% of cereal malted flour
(v) with 0.5- 1.5 wt% of salt
(vi) and with 7-80 wt% on flour of a predough with the composition according to claim 1, wherein the ingredients (i)-(v) are mixed and kneaded first during 3-20 minutes, preferably 4-18 minutes, whereafter the mixture so obtained is rested during at least 3 minutes, preferably at least 5 minutes and the mixture obtained after resting is fermented during at least 15 minutes.

## Patentansprüche

1. Fermentierter Vorteig, geeignet als Additiv zur Zubereitung eines fermentationsverträglichen, stabilen Endteigs mit Trocken-Klebrigkeit, welcher Vorteig umfasst:
(i) ein Weizenmehl mit einem Proteingehalt von 8,5 bis 15,5 Gew.% und, bezogen auf das Mehl:
(ii) 30 bis 65 Gew.% Wasser, vorzugsweise 40 bis 60 Gew.%,
(iii) 0,1 bis 5 Gew.% Hefe, vorzugsweise 0,3 bis 2 Gew.%,
(iv) 0,5 bis 10 und vorzugsweise 2 bis 8 Gew.% eines Brot-Verbesserungsmix wie erhältlich als Trocken-Mischung nach Mischen von:
(a) > 97,5 Gew.% und vorzugsweise > 98,5 Gew.% eines Weizen-Sauerteigs,
(b) 0,1 bis 1 und vorzugsweise 0,2 bis 0,8 Gew.% Ascorbinsäure und
(c) 0,005 bis 0,5 und vorzugsweise 0,01 bis 0,3 Gew.% einer Enzym-Zusammensetzung mit α-Amylase- und/oder Xylanase-Aktvität.

2. Fermentationsverträglicher, stabiler Teig mit einer Trocken-Klebrigkeit, umfassend:
(i) ein Weizenmehl mit einem Proteingehalt von 8,5 bis 15,5 Gew.% und, bezogen auf das gesamte Teiggewicht:
(ii) 15 bis 50 und vorzugsweise 18 bis 45 Gew.% Wasser,
(iii) 0,04 bis 4 und vorzugsweise 0,05 bis 2 Gew.%. Hefe,
(iv) 0,01 bis 0,4 und vorzugsweise 0,02 bis 3 Gew.% Getreide-Malzmehl oder Teig-Konditioniermittel oder generisches Brot-Verbesserungsmittel,
(v) 0,5 bis 1,5 und vorzugsweise 1 bis 1,2 Gew.% Salz,
(vi) 7 bis 80 und vorzugsweise 8 bis 75 Gew.% des Vorteigs mit der Zusammensetzung von Anspruch 1.

3. Verfahren zur Zubereitung eines fermentierten Vorteigs, der sich als Additiv zur Zubereitung eines fermentationstoleranten, stabilen Teigs mit Trocken-Klebrigkeit eignet, wobei:
(i) ein Weizenmehl mit einem Proteingehalt von 8,5 bis 15,5 Gew.% vermischt wird mit:
(ii) 30 bis 65 Gew.% Wasser, bezogen auf Mehl,
(iii) 0,1 bis 5 Gew.% Hefe, bezogen auf Mehl,
(iv) 0,5 bis 10 Gew.%, bezogen auf Mehl, eines Brot-Verbesserungsmix wie erhältlich als Trocken-Mischung nach Mischen von:
(a) > 97,5 Gew.% eines Weizen-Sauerteigs,
(b) 0,1 bis 1 Gew.% Ascorbinsäure und von
(c) 0,005 bis 0,5 Gew.% einer Enzym-Zusammensetzung mit α-Amylase- und/oder Xylanase-Aktivität,
wobei die obigen Bestandteile (i) bis (iv) bei Umgebungstemperatur mindestens 2 min lang vermischt und geknetet werden, während die so erhaltene Mischung bei 5 bis 30°C mindestens 1,5 h lang fermentiert wird.

4. Verfahren zur Zubereitung eines fermentationstoleranten, stabilen Teigs mit Trocken-Klebrigkeit, wobei man:
(i) ein Weizenmehl mit einem Proteingehalt von 8,5 bis 15 Gew.%
(ii) mit 15 bis 50 Gew.% Wasser, bezogen auf Mehl,
(iii) mit 0,045 bis 2 Gew.% Hefe, bezogen auf Mehl,
(iv) mit 0,01 bis 0,4 Gew.% Getreide-Malzmehl,
(v) mit 0,5 bis 1,5 Gew.% Salz
(vi) und mit 7 bis 80 Gew.%. bezogen auf Mehl, eines Vorteigs der Zusammensetzung gemäß Anspruch 1 vermischt und knetet, wobei die Bestandteile (i) bis (v) zuerst 30 bis 20 und vorzugsweise 4 bis 18 min lang vermischt und geknetet werden, worauf die so erhaltene Mischung mindestens 3 und vorzugsweise mindestens 5 min lang stehen gelassen und die dann erhaltene Mischung nach dem Stehenlassen mindestens 15 min lang fermentiert werden.

## Revendications

1. Prépâte fermentée, adaptée en tant qu'additif pour la préparation d'une pâte finale stable tolérante à la fermentation de nature collante sèche, cette prépâte comprenant :
(i) une farine de blé présentant une teneur en protéines comprise entre 8,5 et 15,5 % en poids et par rapport à la farine :
(ii) de 30 à 65 % en poids d'eau, préférentiellement de 40 à 60 % en poids ;
(iii) de 0,1 à 5 % en poids de levure, préférentiellement de 0,3 à 2 % en poids ;
(iv) de 0,5 à 10 % en poids, préférentiellement de 2 à 8 % en poids d'un mélange exhausteur pour pain tel que pouvant être obtenu comme mélange sec après mélange de :
(a) plus de 97,5 % en poids, préférentiellement plus de 98,5 % en poids de pâte sure de blé ;
(b) de 0,1 à 1 % en poids, préférentiellement de 0,2 à 0,8 % en poids d'acide ascorbique ; et
(c) de 0,005 à 0,5 % en poids, préférentiellement de 0,01 à 0,3 % en poids d'une composition enzymatique présentant une activité d'alpha amylase et/ou de xynalase.

2. Pâte stable tolérante à la fermentation de nature collante sèche comprenant :
(i) une farine de blé présentant une teneur en protéines comprise entre 8,5 et 15,5 % en poids et par rapport au poids total de farine :
(ii) de 15 à 50 % en poids d'eau, préférentiellement de 18 à 45 % en poids ;
(iii) de 0,04 à 4 % en poids de levure, préférentiellement de 0,05 à 2 % en poids ;
(iv) de 0,01 à 0,4 % en poids, préférentiellement de 0,02 à 0,03 % en poids de farine de céréales maltées, de conditionneur de pâte ou d'exhausteur de pain générique ;
(v) de 0,5 à 1,5 % en poids, préférentiellement de 1 à 1,2 % en poids de sel ; et
(vi) de 7 à 80 % en poids, préférentiellement de 8 à 75 % de la prépâte selon la composition de la revendication 1.

3. Procédé de fabrication d'une prépâte fermentée, adaptée en tant qu'additif pour la préparation d'une pâte finale stable tolérante à la fermentation de nature collante sèche, dans laquelle :
(i) une farine de blé présentant une teneur en protéines comprise entre 8,5 et 15,5 % en poids est mélangée avec :
(ii) de 30 à 65 % en poids d'eau par rapport à la farine ;
(iii) de 0,1 à 5 % en poids de levure par rapport à la farine ;
(iv) de 0,5 à 10 % en poids par rapport à la farine d'un mélange exhausteur pour pain tel que pouvant être obtenu comme mélange sec après mélange de :
(a) plus de 97,5 % en poids de pâte sure de blé ;
(b) de 0,1 à 1 % en poids d'acide ascorbique ; et
(c) de 0,005 à 0,5 % en poids d'une composition enzymatique présentant une activité d'alpha amylase et/ou de xynalase,
dans lequel les ingrédients susmentionnés (i) à (iv) sont mélangés et pétris à température ambiante pendant au moins 2 minutes, tandis que le mélange ainsi obtenu est fermenté de 5 à 30°C pendant au moins 1,5 heures.

4. Procédé de fabrication d'une pâte stable tolérante à la fermentation de nature collante sèche par :
(i) mélange et pétrissage d'une farine de blé présentant une teneur en protéines comprise entre 8,5 et 15,5 % en poids ;
(ii) avec de 15 à 50 % en poids d'eau par rapport à la farine ;
(iii) avec de 0,045 à 2 % en poids de levure par rapport à la farine ;
(iv) avec de 0,01 à 0,4 % en poids de farine de céréale maltée ;
(v) avec de 0,5 à 1,5 % en poids de sel ; et
(vi) avec de 7 à 80 % en poids par rapport à la farine d'une prépâte selon la composition de la revendication 1, dans laquelle les ingrédients susmentionnés (i) à (v) sont d'abord mélangés et pétris pendant 3 à 20 minutes, préférentiellement de 4 à 18 minutes, où le mélange ainsi obtenu est laissé reposer pendant au moins 3 minutes, préférentiellement pendant au moins 5 minutes et dans laquelle le mélange obtenu après repos est fermenté pendant au moins 15 minutes.
